# EUROPÄISCHE PATENTSCHRIFT

(11) **EP 2 713 050 B1**
(45) Veröffentlichungstag und Bekanntmachung des Hinweises auf die Patenterteilung: **30.10.2019**
(21) Anmeldenummer: 12186727.9
(22) Anmeldetag: 28.09.2012
(51) Int. Cl.: F03G 7/06

(54) **Stellantrieb mittels eines Formgedächtniselements**
Memory shape alloy actuator
Mécanisme de commande parmi un alliage à mémoire de forme

(43) Veröffentlichungstag der Anmeldung: 02.04.2014
(73) Patentinhaber: Inventas AG, 6340 Baar (CH)
(72) Erfinder: Hagmann, Stefan, 6344 Meierskappel (CH); Partel, Robert, 6300 Zug (CH); Risch, Fabian, 8037 Zürich (CH)
(74) Vertreter: Riebling, Peter

(56) Entgegenhaltungen:
- EP-A2- 0 304 944
- WO-A1-03/069644
- DE-U1- 9 100 339
- US-A- 4 765 139
- US-A- 4 841 730
- US-B1- 6 272 857
- US-B1- 7 159 398

## Beschreibung

Die Erfindung betrifft einen Stellantrieb gemäß dem Oberbegriff des Anspruches 1.

Darin verstellt ein Formgedächtniselement infolge seiner Beheizung ein Anschlusselement, welches seinerseits bei Montage des Stellantriebes beispielsweise auf einem Ventil dessen Stößel verstellt.

Stellantriebe mittels Formgedächtniselemente finden unter anderen in der Automobiltechnik und in der Haustechnik bereits Anwendung, insbesondere für die Entriegelung von Türschlössern oder neulich für die Sicherheitsschließung von Luftklappen im Brandfall. In diesen Anwendungen müssen sie preiswert, einfach in großen Stückzahlen herstellbar, zuverlässig und beständig sein, nämlich einen Mindestarbeitsweg und eine Mindestkraft, sowie eine Mindestanzahl an Stellzyklen oder eine Mindestlebensdauer, leisten. Je nach Anwendung ist eine Maximaleinschaltzeit oder eine Maximalabschaltzeit einzuhalten.

Ein Stellantrieb gemäß dem Oberbegriff des Anspruches 1 ist in den Figuren 2 und 3 von US4841730 gezeichnet worden.

Bereits in DE9100339U1 ist ein Linearantrieb mit unbestimmter Anwendung gezeigt, welcher ein für die Erfindung relevantes Wärmeleitelement enthält, nämlich ein Rohrelement aus gut wärmeleitendem Werkstoff. Zwecks dessen Kühlung enthält das Gehäuse Lüftungsöffnungen. Zwecks seiner Erwärmung berührt das Rohrelement an einer anderen Stelle ein Heizelement. Das Rohrelement umschließt eine spiralförmige, parallel angeordnete Memorymetall-Feder. Diese Memorymetall-Feder wird seitlich nicht durch das Rohrelement, sondern durch eine innenliegende Stirnfläche des Gehäuses abgestützt. Somit kann sie das Rohrelement nicht für eine optimale Wärmeübertragung berühren. Dementsprechend weist die Memorymetall-Feder über ihre Länge einen offensichtlich runden, nicht zur Innenseite des Rohrelementes passenden Querschnitt auf.

US2001/0038082A1 beschreibt einen Stellantrieb mittels Formgedächtniselement für einen Regelventil, wobei ein Einsatz in der industriellen Herstellung genannt ist, insbesondere in der Halbleiterindustrie, also in einem sehr stabilen Klima. Eine Stellungsregelung fordert zu jeder Zeit eine genaue Dosierung von Heizung oder Kühlung. Deswegen wird ein aktives Kühlelement im Sinne eines Drehventilators, eines Piezo-Ventilators oder eines Peltier-Halbleiters vorgeschlagen. Auf ein Wärmeleitelement wird gänzlich verzichtet. Zusätzlich ist zumindest ein Sensor und praktisch ein Mikroprozessor benötigt. Der auf Spulen aufgewickelte Formgedächtnisdraht lässt sich nicht einfach in hohen Stückzahlen assemblieren. Ventilatoren verursachen Geräusche und würden außerhalb eines Reinraums die Ablage von Staub auch an für den Mechanismus heiklen Stellen fördern.

Es werden bogenförmige Formgedächtniselemente für Antriebe mit unbestimmter Anwendung vorgeschlagen im Artikel "Actuators and drives based on CU-AL-NI shape memory single crystals" von A.Priadko, S.Pulnev, I.Viahhi, V.Vetrov and V.Yudin vom Institute of Robotics and Technical Cybernetics in St-Petersburg, Russland. Darin ist die Heizung der Formgedächtniselemente mittels eines aufgewickelten Widerstanddrahts abgebildet, was eine gleichmäßige Erwärmung ermöglicht, aber dessen Kühlung erschwert. Ein Wärmeleitelement ist nicht vorhanden.

WO03/069644 zeigt einen Stellantrieb, in welchem ein gerades Formgedächtniselement nur über ein Teil seiner Länge mechanisch mit einem aufwendig herzustellenden Wärmeleitelement aus für Elektrizität und Wärme leitfähig gebildetem Kunststoff verbunden ist. Es sind keine Maßnahmen zur schnellen und gleichmäßigen Abkühlung des Formgedächtniselements vorhanden.

US4765139 beschreibt einen Antrieb mit ebenso einem geraden oder mit einem bogenförmigen Formgedächtniselement. Dessen Beheizung und Kühlung erfolgt mittels aufwendiger thermoelektrischer Halbleitergeneratoren via Metalldrahtbürsten die es auf einer kleinen Oberfläche berühren. Somit wird das Formgedächtniselement schnell aber nicht gleichmäßig und nicht kostengünstig beheizt und abgekühlt.

Stellantriebe mittels Formgedächtniselemente sollen auch in Regelanlagen für Heizung, Lüftung oder Klima zum Einsatz kommen, insbesondere um Ventile für Wasser, Kältemittel oder Gas zu betätigen. Zu diesem Zweck sind Stellantriebe benötigt, die im Stellbereich von 2 bis 3 mm und bei Stellkräften von rund 100 N arbeiten, wobei solche Werte bloß als typisches Beispiel oder als Andeutung einer Größenordnung anzunehmen sind. Diese Leistungen gilt es typisch über 100'000 Stellzyklen während 8 Jahren zu erhalten.

Sowohl das Einschalten wie auch das Abschalten von Stellantrieben in Regelanlagen für Heizung, Lüftung oder Klima soll innerhalb einer Maximalzeit erfolgen. Diese Maximalzeiten sind von der Anwendung abhängig und betragen beispielsweise für Einschalten und Abschalten je eine Minute. Solche Stellantriebe sollten auch einen Maximalverbrauch pro Jahr einhalten, je nach Anwendung bis zu etwa 30 kWh. Sie müssen ausreichend robust sein, um eine Überbelastung im Betrieb zu bestehen, wie zum Beispiel schlagartig durch einen Fremdkörper im zu stellenden Bereich, oder durch Verschleiß über die Zeit auftreten mag. Vor allem jedoch müssen im Wohnbereich installierte Stellantriebe einen nahezu geräuschlosen Betrieb aufweisen.

Bislang sind bloß Stellantriebe geeignet, die mittels eines Elektromotors mit einem Getriebe, oder aber auf Basis einer Magnetspule, oder aber dank eines wachsgefüllten, beheizbaren Zylinders mit Hubkolben, funktionieren. Der letztgenannte Lösungsansatz ermöglicht einen besonders leisen Betrieb.

Seit langem wird versucht, bislang ohne erkennbaren Erfolg, auch Stellantriebe mittels eines Formgedächtniselementes zu entwickeln, die solchen Anforderungen gewachsen sind. Offensichtliche Vorteile von Formgedächtniselementen nämlich sind deren verschleiß- und geräuschloser Betrieb und die vergleichsweise tiefen Komponentenkosten.
Eine Herausforderung dabei ist der Temperaturhaushalt, erstens weil das Heizelement während typisch langer Betätigung das Formgedächtniselement auf erhöhter Temperatur halten muss. Eine Wärmeisolierung des Formgedächtniselementes würde zwar Energieverluste verringern, sich aber nachteilig auf dessen Abkühlung auswirken. Dies würde die Rückkehr des Formgedächtniselementes zur Ausgangsform innerhalb von der vorgegebenen Maximalabschaltzeit gefährden. Erschwerend kommt dazu, dass der Stellantrieb wechselnd hohe Temperaturen aus der Umgebung ausgesetzt ist, bei der das Formgedächtniselement zögerlich zur Ausgangsform zurückkehrt. Zu anderen Betriebszeiten mag die Umgebungstemperatur tief sein, was dann die Einschaltzeit vergrößert. Insbesondere Ventilstellantriebe in eng bemessenen Räumen mit Heizleitungen sind manchmal hohen Temperaturen ausgesetzt.

Als zusätzliche Herausforderung muss ein Stellantrieb mittels Formgedächtniselementes in Regelanlagen für Heizung, Lüftung oder Klima im Vergleich zu den üblichen Anwendungen viel Kraft entwickeln. Aus Überlegungen der einfachen Herstellung und der Vermeidung eines Getriebes ist ein großer Einfachquerschnitt eines kompakten Formgedächtniselementes gegenüber dem Mehrfachquerschnitt eines aufgewickelten Formgedächtnisdrahtes zu bevorzugen. Dies jedoch verkleinert seine Oberfläche gegenüber seinem Volumen, was die Herausforderung bezüglich seines Temperaturhaushalts nochmals verschärft.

Ebenso haben Dauerversuche gezeigt, dass man mit Erwärmung bloß an einer kleinen Oberfläche des Formgedächtniselementes die hohe Kraft und die Mindestanzahl an Stellzyklen mit dem Mindestarbeitsweg nicht zuverlässig einhalten kann, weshalb die Aufwärmung des Formgedächtniselementes bevorzugt gleichmäßig stattfinden soll.

EP304944A2 zeigt Ventilantriebe in Regelanlagen für Heizung, Lüftung oder Klima die scheibenförmige Formgedächtnisringe aufweisen. Bei Beheizung drehen die Formgedächtnisringe sich je zu einem abgestumpften Kegel aus, wobei praktisch jede Berührung mit einem zentral angeordneten Wärmeleitelement verlorengeht. Optional werden sie durch Fluten mit der zu regelnden Flüssigkeit beheizt oder abgekühlt. Unbekannt ist, ob solche Ventilantriebe je im Markt erhältlich gewesen sind. In EP922892A1 ist ein Stellantrieb für die Anwendung in Regelanlagen für Heizung, Lüftung oder Klima beschrieben, um ein Ventil zwischen zwei Stellpunkten hin und her zu schalten, und zwar mit reversibler Einstellung der Arbeitsrichtung. Er verwendet beispielsweise ein aus einer Formgedächtnislegierung bestehendes Metallband, welches beim Aufheizen seine Länge ändert. Ein Wärmeleitelement fehlt. Ein solcher Stellantrieb ist nicht im Markt erhältlich.

Neulich wurde mit EP19269288A1 ein Stellantrieb gemäß dem Oberbegriff des Anspruches 1 veröffentlicht. Er soll ein Ventil zwischen zwei Stellpunkten hin und her schalten. Ein Wärmeleitelement erstreckt sich bloß zwischen dem aus einer Legierung mit eingeprägtem Formgedächtnis bestehendes metallisches Bauteil und dem Heizelement. Es berührt eine kleine Oberfläche des Bauteils an zumindest einer Längsseite und dort über einen wesentlichen Teil dessen Breite, ist jedoch offensichtlich ungeeignet, um die Anforderungen des Temperaturhaushaltes einhalten zu können. Das Bauteil selbst ist im Wesentlichen gerade, weil in einem Bogen, gestaltet, welcher Bogen sich bei seiner Beheizung streckt. Es ist im Wesentlichen quer zur Bewegungsrichtung des Ventilstößels orientiert. Ein solcher Stellantrieb ist zur Zeit nicht im Markt erhältlich.

Der Erfindung liegt die Einsicht zugrunde, dass man Stellantriebe mittels eines Formgedächtniselementes mit einfachen mechanischen Mitteln wesentlich verbessern und insbesondere zu Anwendungen in Regelanlagen für Heizung, Lüftung oder Klima befähigen kann.

Die erfindungsgemäße Lösung wird durch die Merkmale des Anspruches 1 dargestellt. Ein Wärmeleitelement mit einer freien Oberfläche ermöglicht innerhalb von den weit variablen Betriebsumständen eine optimierte Balance zwischen Einschaltzeit, Abschaltzeit, Energieeffizienz und Beständigkeit, und unterstützt zugleich die Halterung des Formgedächtniselementes. Zwecks Kühlung ist die freie Oberfläche bevorzugt zumindest um den Faktor 1,6 größer als die Oberfläche, auf der das Wärmeleitelement das Formgedächtniselement berührt.

Nachfolgend werden Ausführungsbeispiele der Erfindung anhand der Figuren beschrieben.
Figur 1 zeigt schematisch ein Schnittbild eines erfindungsgemäßen Stellantriebes, sowie eines Wasserventils auf dem er montiert ist.
Figur 2 zeigt aus einer anderen Perspektive schematisch und teilweise den Stellantrieb nach Figur 1, sowie den Wasserventil auf dem er montiert ist.
Figur 3 zeigt aus einer anderen Perspektive schematisch ein Formgedächtniselement, ein Heizelement und ein Wärmeleitelement des Stellantriebes nach Figur 1.
Figur 4 zeigt in Seitenansicht schematisch das Formgedächtniselement, ein alternatives Heizelement und ein alternatives Wärmeleitelement eines erfindungsgemäßen Stellantriebes.
Figur 5 zeigt aus einer anderen Perspektive schematisch das Formgedächtniselement, das Heizelement und das Wärmeleitelement des Stellantriebes nach Figur 4.

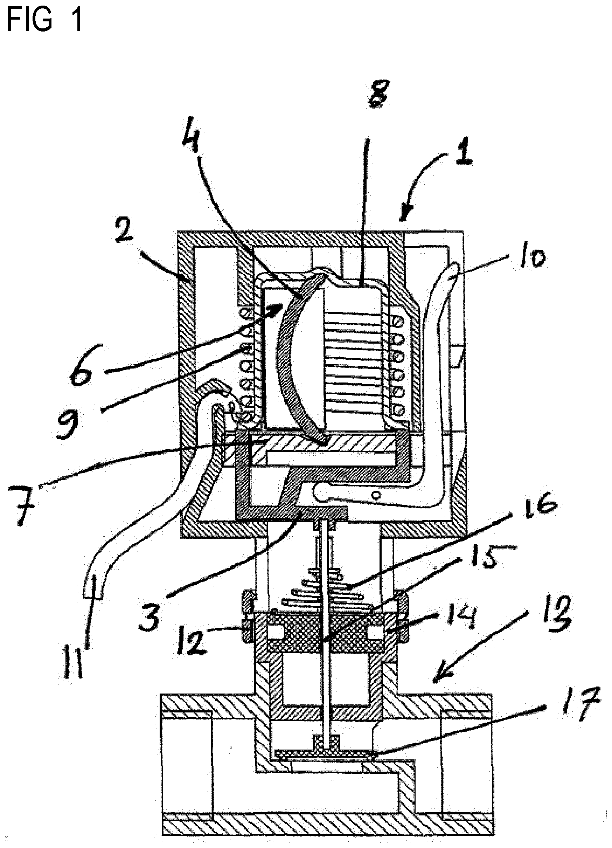

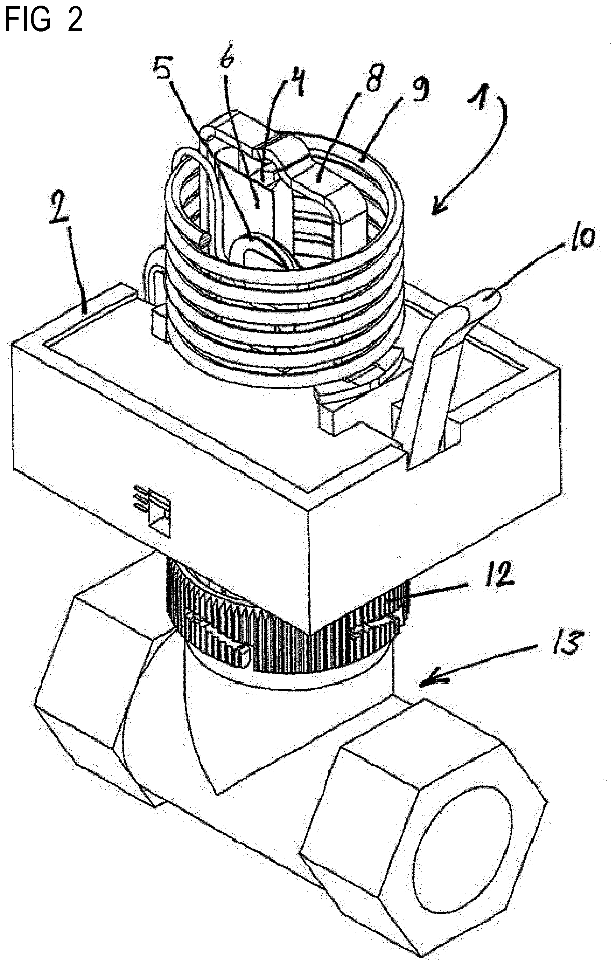

In Figur 1 und Figur 2 umfasst der Stellantrieb 1 ein Gehäuse 2, ein Anschlusselement 3, ein Formgedächtniselement 4, ein Heizelement 5 und ein Wärmeleitelement 6. In dieser Stellung ist das Formgedächtniselement 4 nicht durch seine Beheizung eingeschaltet worden.

Zwecks günstiger Fertigung besteht das Wärmeleitelement 6 aus einem Metallblech. Viele Legierungen sind ausreichend wärmeleitfähig und im richtigen Ausmaß biegbar. Es hat sich gezeigt, dass solche mit einem Gewichtsanteil von zumindest 90% an Kupfer, allfällig mit einer korrosionsfesten und glatten Beschichtung, besonders geeignet sind. In einer nicht dargestellten Ausführung mag das Wärmeleitelement dank gut wärmeleitender Ankopplung zusätzlich Metallteile des Gehäuses beinhalten.

Das Gehäuse 2 umfasst ein starr verbundenes Gehäuseteil 7, in welchem eine Aussparung ein Ende des bogenförmigen Formgedächtniselementes 4 lose aufnimmt. Ähnlich umfasst das Anschlusselement 3 ein jochförmiges Übertragungselement 8, welches unter Druck einer Feder 9 gegen dem Anschlusselement 3 gehalten wird. Eine Aussparung zentral im Übertragungselement 8 nimmt das andere Ende des bogenförmigen Formgedächtniselementes 4 lose auf. Beide Aussparungen sind im Wesentlichen trichterförmig gestaltet, um die abgeschrägten Enden des Formgedächtniselementes 4 bei dessen Formänderung zu zentrieren.

Das Formgedächtniselement 4 liegt an seinen Längsseiten die sich parallel zur Schnittebene in der Figur 1 erstrecken, an Wärmeleitelementflächen des Wärmeleitelementes 6 an. Seine Oberfläche, auf der das Wärmeleitelement 6 es berührt, erstreckt sich über einen wesentlichen Teil seiner Breite. Diese Wärmeleitelementflächen drücken leicht federnd gegen das Formgedächtniselement 4 und tragen zu dessen Halterung bei. Somit liegt das Wärmeleitelement 6 während seiner Berührung zumindest teilweise verschiebbar am Formgedächtniselement 4 an. Je nach Dimensionierung und Materialauswahl mag es vorteilhaft sein, während dessen Formänderung die Bewegung des Formgedächtniselementes 4 entlang den Wärmeleitelementflächen durch eine Wärmeleitpaste zu schmieren und thermisch zu kontaktieren. In einer nicht dargestellten Ausführung mag das Formgedächtniselement spiralförmig gestaltet sein und außenseitig eine Wärmeleithülse berühren.

Das Formgedächtniselement 4 besteht aus einer bekannten Legierung, hauptsächlich aus Nickel und Titan, welche der Fachmann anhand der Anforderungen aus im Handel leicht erhältliche Legierungen auswählen kann. Beim Beheizen von etwa 70 °C bis knapp 100 °C wechselt sie ihre Struktur namens Martensit zu einem namens Austenit. Mit dieser Änderung kann sie Arbeit verrichten.

In einer Abwägung zwischen Kraft, Arbeitsweg und Wärmehaushalt weist das Formgedächtniselement 4 bevorzugt zumindest über die Hälfte seiner Länge eine Querschnittfläche auf, die größer als der Faktor 0,002 seiner Länge im Quadrat ist.

Elektrische Leitungen zur Betätigung des Heizelementes 5 sind in Kabel 11 geführt. Das Heizelement 5 ist ein Widerstand mit sogenannter "positive temperature coefficient" oder "PTC", welcher bei seiner Betätigung selbstregelnd auf etwa 120 °C erhitzt. Durch Berührung mit dem Heizelement 5 wird das Wärmeleitelement 6 aufgewärmt, welches seinerseits das Formgedächtniselement 4 berührt. In einer nicht dargestellten Ausführung mag das Heizelement eine elektrische Speiseeinrichtung sein, welche zwecks Heizung einen elektrischen Strom durch das Formgedächtniselement oder durch einen um es gewickelten Widerstanddraht erzeugt.

Infolge seines Aufwärmens vergrößert das Formgedächtniselement 4 seine Länge dadurch, dass es seine Biegung reduziert. Das Formgedächtniselement 4 ist so dimensioniert worden, dass es dabei Übertragungselement 8 gegen die Wirkung der Feder 9 hin anhebt, weswegen das Anschlusselement 3 nicht mehr herunter gedrückt wird.

Übrigens lässt sich der Stellantrieb 1 händisch mittels Verstellhebel 10 einschalten und abschalten.

Der Stellantrieb 1 ist mittels eines Bajonettrings 12 auf einem Wasserventil 13 mit einer komplementären Bajonettflansche 14 montiert. Dort drückt nun das Anschlusselement 3 einen Stößel 15 nicht mehr herunter, weshalb eine kleinere Feder 16 ihn samt Ventilteller 17 aufhebt und dem Wasser freie Bahn gibt.

Zum Abschalten wird die Betätigung des Heizelementes 5 aufgehoben. Dadurch kühlt das Formgedächtniselement 4 wieder ab. Bei etwa 80 °C fängt es an, seine Struktur zu Martensit zurück zu wechseln, was bei etwa 50 °C vollendet ist. Da es einen intrinsischen Zweiwegeffekt aufweist, kehrt es ohne mithilfe äußerer Krafteinwirkung zum Ausgangsform zurück. Dies setzt ein sogenanntes Training gemäß einem den Anforderungen entsprechenden Verfahren voraus. In einer nicht dargestellten Ausführung wäre ein Formgedächtnismaterial mit äußerem Zweiwegeffekt oder mit Einwegeffekt, welches dies nur mithilfe einer äußeren Kraft macht, auch möglich. Dafür wäre kein Training benötigt.

Zwecks gleichmäßiger Heizung und Kühlung ist die Oberfläche, auf der das Wärmeleitelement 6 das Formgedächtniselement 4 berührt, bevorzugt größer als der Faktor 0,1 der gesamten Oberfläche des Formgedächtniselementes 4. Sogar falls in nicht dargestellter Ausführung das Heizelement direkt am Formgedächtniselement anliegt, zumindest während der Heizung, verteilt das Wärmeleitelement wegen den typischen Eigenschaften von Formgedächtnismaterialien die Wärme besser. Bevorzugt ist das Heizelement 5 so gestaltet und im Gehäuse angeordnet, dass es während seiner Betätigung das Formgedächtniselement 4 oder das dann das Formgedächtniselement 5 berührende Wärmeleitelement 6 berührt, und ist die Oberfläche, auf der das Wärmeleitelement 5 so direkt oder indirekt das Formgedächtniselement 4 beheizt, größer als der Faktor 0,1 der gesamten Oberfläche des Formgedächtniselementes 4.

Ist ein Formgedächtniselement einmal aufgewärmt worden, und bleibt die korrespondierende Stellung des Stellantriebes über eine längere Zeit gefragt, so mag das Wärmeleitelement in einer nicht dargestellten Ausführung auf Distanz zum Formgedächtniselement gebracht werden, zum Beispiel durch Einschaltung eines kleineren, zusätzlichen Formgedächtniselementes.

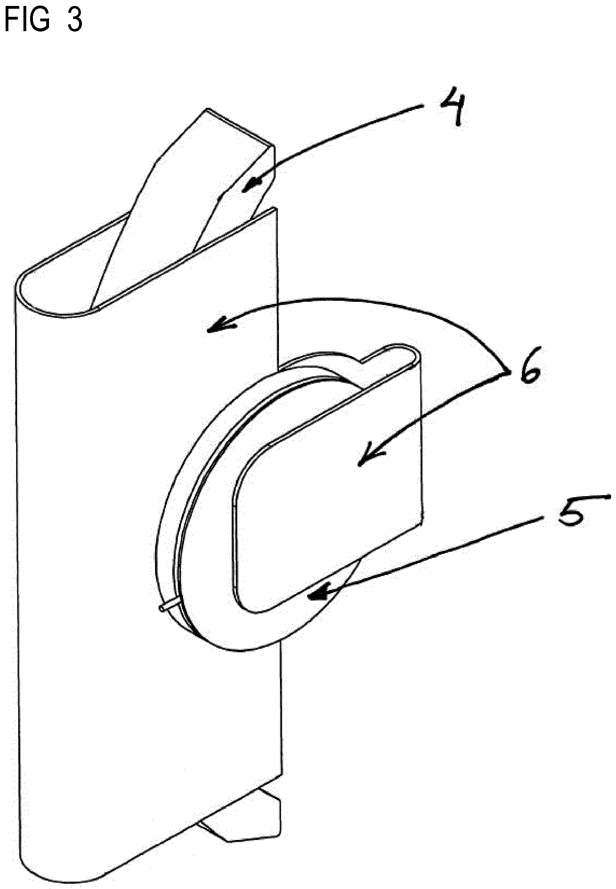

Figur 3 zeigt wie das Wärmeleitelement 6 das Heizelement 5 zwecks Wärmeübertragung und Halterung an dessen sich im Wesentlichen gegenüberliegenden Seiten berührt. Bevorzugt ist das Heizelement 5 federnd eingeklemmt oder passend aufgenommen worden, damit ein Klebemittel überflüssig ist.

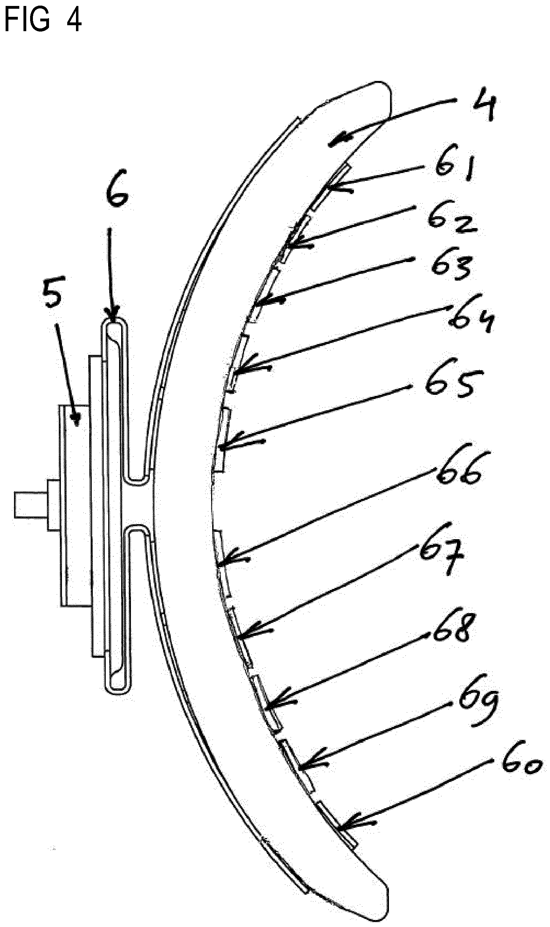

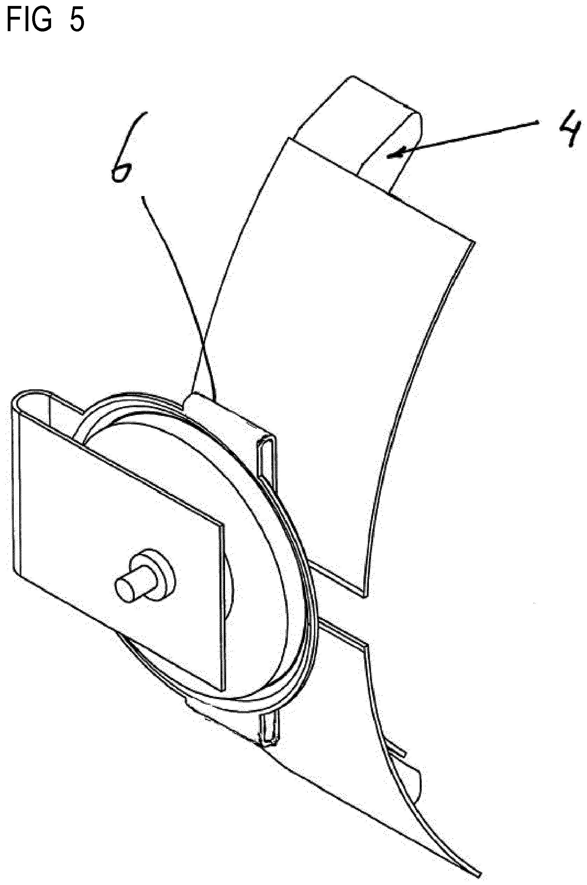

In Figur 4 und Figur 5 hält ein alternatives Wärmeleitelement 6 das Formgedächtniselement 4 an dessen Rückenseite und mittels seiner zehn Finger 60 bis 69 an einer Längsseite und an der Vorderseite eingeklemmt. Somit entsteht eine besonders große Berührung.

Das Heizelement 5 ist in dem Sinne vom Formgedächtniselement 4 entkoppelt, dass das Wärmeleitelement 6 zwischen den beiden auf nur einer kleinen Querschnittfläche verengt ist. Diese Teilentkopplung mag den Wärmehaushalt dadurch optimieren, dass die Restwärme des Heizelementes 5 unmittelbar nach seiner Betätigung das Abkühlen des Formgedächtniselementes 4 weniger beeinträchtigt, auch wenn sie zu anderer Zeit ein Aufwärmen des Formgedächtniselementes 4 verzögert. Bevorzugt weist dazu das Wärmeleitelement 6 eine kleinste Querschnittfläche auf, die kleiner als der Faktor 0,2 der Oberfläche ist, auf der das Wärmeleitelement 6 das Formgedächtniselement 4 berührt.

## Patentansprüche

1. Stellantrieb, mit einem Gehäuse (2), sowie zumindest mit einem Anschlusselement (3), einem Formgedächtniselement (4), dessen Form sich durch Beheizung ändert, wobei das Formgedächtniselement (4) im Wesentlichen länglich gestaltet und so im Gehäuse (2) angeordnet ist, dass es durch seine Formänderung das Anschlusselement (3) verstellt, mit einem Heizelement (5) das so gestaltet und im Gehäuse (2) angeordnet ist, dass es bei seiner Betätigung das Formgedächtniselement (4) beheizt,
und mit einem Wärmeleitelement (6) das so gestaltet und im Gehäuse (2) angeordnet ist, dass es das Formgedächtniselement (4) zumindest zeitweise berührt, wobei das Wärmeleitelement (6) während seiner Berührung auch eine Oberfläche aufweist, die frei von Berührung durch das Formgedächtniselement (4) oder durch das Heizelement (5) ist, wobei das Wärmeleitelement (6) so gestaltet und im Gehäuse (2) angeordnet ist, dass es das Formgedächtniselement (4) zumindest zeitweise an dessen sich im Wesentlichen gegenüberliegenden Längsseiten berührt,
wobei das Formgedächtniselement (4) an einem Ende in einer Aussparung eines Gehäuseteiles (7) und am anderen Ende in einer Aussparung eines Übertragungselementes (8) aufgenommen ist, **dadurch gekennzeichnet, dass** das Formgedächtniselement (4) durch Beheizung seine Länge durch Biegen oder Strecken ändert, und dass eine durch das Biegen oder Strecken des Formgedächtniselements (4) hervorgerufene Annäherung oder Distanzierung vom Übertragungselement (8) zum Gehäuseteil (7) das Anschlusselement (3) verstellt.

2. Stellantrieb gemäß Anspruch 1, wobei die freie Oberfläche des Wärmeleitelementes (6) zumindest um den Faktor 1,6 größer als die Oberfläche ist, auf der das Wärmeleitelement (6) das Formgedächtniselement (4) berührt.

3. Stellantrieb gemäß einem der vorhergehenden Ansprüche, wobei die Oberfläche, auf der das Wärmeleitelement (6)
das Formgedächtniselement (4) berührt, größer als der Faktor 0,1 der gesamten Oberfläche des Formgedächtniselementes (4) ist.

4. Stellantrieb gemäß einem der vorhergehenden Ansprüche, wobei das Heizelement (5) so gestaltet und im Gehäuse (2) angeordnet ist, dass es während seiner Betätigung das Formgedächtniselement (4) oder das dann das Formgedächtniselement (4) berührende Wärmeleitelement (6) berührt, und die Oberfläche, auf der das Wärmeleitelement (6) so direkt oder indirekt das Formgedächtniselement beheizt, größer als der Faktor 0,1 der gesamten Oberfläche des Formgedächtniselementes (4) ist.

5. Stellantrieb gemäß einem der vorhergehenden Ansprüche, wobei das Wärmeleitelement (6) während seiner Berührung zumindest teilweise verschiebbar an das Formgedächtniselement (4) anliegt.

6. Stellantrieb gemäß einem der vorhergehenden Ansprüche, wobei das Formgedächtniselement (4) zumindest über die Hälfte seiner Länge eine Querschnittfläche aufweist, die größer als der Faktor 0,002 seiner Länge im Quadrat ist.

7. Stellantrieb gemäß einem der vorhergehenden Ansprüche, wobei das Wärmeleitelement (6) so gestaltet und im Gehäuse (2) angeordnet ist, dass es das Heizelement zumindest an dessen sich im Wesentlichen gegenüberliegenden Seiten berührt.

8. Stellantrieb gemäß einem der vorhergehenden Ansprüche, wobei das Wärmeleitelement (6) so gestaltet und im Gehäuse (2) angeordnet ist, dass es zumindest zeit- weise das Heizelement (5) berührt, und das Wärmeleitelement (6) zwischen Heizelement (5) und Formgedächtniselement (4) eine kleinste Querschnittfläche aufweist, die kleiner ist als der Faktor 0,2 der Oberfläche, auf der das Wärmeleitelement das Formgedächtniselement (4) berührt.

## Claims

1. Actuator having a housing (2) and at least having a connecting element (3), a shape memory element (4), the shape of which is changed by heating, wherein the shape memory element (4) is designed to be substantially elongated and is arranged in the housing (2) so that due to a change in its shape, it moves the connecting element (3), having a heating element (5) which is designed and arranged in the housing (2) so that during its actuation it heats the shape memory element (4), and having a heat-conducting element (6) which is designed and arranged in the housing (2) so that it at least at times contacts the shape memory element (4), wherein the heat-conducting element (6) during its contact also has a surface which is free of contact with the shape memory element (4) or with the heating element (5), wherein the heat-conducting element (6) is designed and arranged in the housing (2) so that it contacts the shape memory element (4) at least at times at its substantially opposite longitudinal sides, wherein the shape memory element (4) at one end is received in a recess of a housing part (7) and at the other end in a recess of a transmission element (8), **characterised in that** the shape memory element (4) due to heating changes its length by bending or stretching, and **in that** moving the transmission element (8) closer to or further away from the housing part (7) caused by bending or stretching the shape memory element (4) moves the connecting element (3).

2. Actuator according to claim 1, wherein the free surface of the heat-conducting element (6) is greater at least by the factor 1.6 than the surface on which the heat-conducting element (6) contacts the shape memory element (4).

3. Actuator according to one of the preceding claims, wherein the surface on which the heat-conducting element (6) contacts the shape memory element (4) is greater than the factor 0.1 of the entire surface of the shape memory element (4).

4. Actuator according to one of the preceding claims, wherein the heating element (5) is designed and arranged in the housing (2) so that during its actuation, it contacts the shape memory element (4) or the heat-conducting element (6) then contacting the shape memory element (4), and the surface on which the heat-conducting element (6) heats the shape memory element so directly or indirectly is greater than the factor 0.1 of the entire surface of the shape memory element (4).

5. Actuator according to one of the preceding claims, wherein the heat-conducting element (6) during its contact rests on the shape memory element (4) to be at least partly displaceable.

6. Actuator according to one of the preceding claims, wherein the shape memory element (4) at least over half its length has a cross-sectional area which is greater than the factor 0.002 of its length squared.

7. Actuator according to one of the preceding claims, wherein the heat-conducting element (6) is designed and arranged in the housing (2) so that it contacts the heating element at least on its substantially opposite sides.

8. Actuator according to one of the preceding claims, wherein the heat-conducting element (6) is designed and arranged in the housing (2) so that it contacts the heating element (5) at least at times, and the heat-conducting element (6) between heating element (5) and shape memory element (4) has a smallest cross-sectional area which is smaller than the factor 0.2 of the surface on which the heat-conducting element contacts the shape memory element (4).

## Revendications

1. Mécanisme de commande avec un boîtier (2) ainsi qu'au moins un élément de raccordement (3), un élément à mémoire de forme (4) dont la forme change par chauffage, dans lequel l'élément à mémoire de forme (4) a une forme sensiblement oblongue et est disposé dans le boîtier (2) de manière à déplacer par son changement de forme l'élément de raccordement (3), avec un élément chauffant (5) qui est formé et qui est disposé dans le boîtier (2) de manière à chauffer, lors de son actionnement, l'élément à mémoire de forme (4) et avec un élément conducteur de chaleur (6) qui est formé et qui est disposé dans le boîtier (2) de manière à toucher au moins temporairement l'élément à mémoire de forme (4), dans lequel l'élément conducteur de chaleur (6) présente aussi, pendant son contact, une surface qui n'est pas touchée par l'élément à mémoire de forme (4) ou l'élément chauffant (5), dans lequel l'élément conducteur de chaleur (6) est formé et est disposé dans le boîtier (2) de manière à toucher au moins temporairement l'élément à mémoire de forme (4) sur les côtés longitudinaux sensiblement opposés de celui-ci, dans lequel l'élément à mémoire de forme (4) est reçu à une extrémité dans un creux d'une partie de boîtier (7) et à l'autre extrémité dans un creux d'un élément de transmission (8),
**caractérisé en ce que** l'élément à mémoire de forme (4), par chauffage, change de longueur par flexion ou extension et **en ce qu'**un rapprochement ou un éloignement entre l'élément de transmission (8) et la partie de boîtier (7) provoqué par la flexion ou l'extension de l'élément à mémoire de forme (4) déplace l'élément de raccordement (3).

2. Mécanisme de commande selon la revendication 1, dans lequel la surface libre de l'élément conducteur de chaleur (6) est plus grande d'au moins le facteur 1,6 que la surface sur laquelle l'élément conducteur de chaleur (6) touche l'élément à mémoire de forme (4).

3. Mécanisme de commande selon l'une des revendications précédentes, dans lequel la surface sur laquelle l'élément conducteur de chaleur (6) touche l'élément à mémoire de forme (4) est plus grande que le facteur 0,1 de la surface totale de l'élément à mémoire de forme (4).

4. Mécanisme de commande selon l'une des revendications précédentes, dans lequel l'élément chauffant (5) est formé et est disposé dans le boîtier (2) de manière à toucher, lorsqu'il est actionné, l'élément à mémoire de forme (4) ou l'élément conducteur de chaleur (6) touchant alors l'élément à mémoire de forme (4) et la surface sur laquelle l'élément conducteur de chaleur (6) chauffe ainsi directement ou indirectement l'élément à mémoire de forme est plus grande que le facteur 0,1 de la surface totale de l'élément à mémoire de forme (4).

5. Mécanisme de commande selon l'une des revendications précédentes, dans lequel l'élément conducteur de chaleur (6), pendant son contact, est appliqué au moins temporairement de manière mobile contre l'élément à mémoire de forme (4).

6. Mécanisme de commande selon l'une des revendications précédentes, dans lequel l'élément à mémoire de forme (4) présente sur la moitié au moins de sa longueur une surface de section transversale qui est plus grande que le facteur 0,002 de sa longueur au carré.

7. Mécanisme de commande selon l'une des revendications précédentes, dans lequel l'élément conducteur de chaleur (6) est formé et est disposé dans le boîtier (2) de manière à toucher l'élément chauffant au moins sur les côtés sensiblement opposés de celui-ci.

8. Mécanisme de commande selon l'une des revendications précédentes, dans lequel l'élément conducteur de chaleur (6) est formé et est disposé dans le boîtier (2) de manière à toucher au moins temporairement l'élément chauffant (5) et l'élément conducteur de chaleur (6) présente entre l'élément chauffant (5) et l'élément à mémoire de forme (4) une surface de section transversale minimale qui est plus petite que le facteur 0,2 de la surface sur laquelle l'élément conducteur de chaleur touche l'élément à mémoire de forme (4).
